# EUROPÄISCHE PATENTSCHRIFT

(11) **EP 4 173 847 B1**
(45) Veröffentlichungstag und Bekanntmachung des Hinweises auf die Patenterteilung: **18.09.2024**
(21) Anmeldenummer: 22201514.1
(22) Anmeldetag: 14.10.2022
(51) Int. Cl.: B60C 11/03

(54) **FAHRZEUGLUFTREIFEN**
PNEUMATIC TYRE FOR VEHICLES
BANDAGE PNEUMATIQUE POUR VÉHICULE

(30) Priorität: 29.10.2021 DE 102021212262
(43) Veröffentlichungstag der Anmeldung: 03.05.2023
(73) Patentinhaber: Continental Reifen Deutschland GmbH, 30175 Hannover (DE)
(72) Erfinder: Özüduru, Ahmet, 30165 Hannover (DE); Soyyuece, Atakan, 30165 Hannover (DE); Pagac, Lubomir, 30165 Hannover (DE); Jankowski, Morten, 30165 Hannover (DE)
(74) Vertreter: Continental Corporation

(56) Entgegenhaltungen:
- EP-A1- 3 173 253
- EP-A1- 3 888 944
- JP-A- 2008 222 075
- JP-A- 2019 182 338
- US-A1- 2017 050 470
- US-A1- 2019 308 466

## Beschreibung

Die Erfindung betrifft einen Fahrzeugluftreifen mit einem Laufstreifen mit zumindest einer, an jeder Seite von einer Umfangsrille begrenzten mittleren Profilrippe mit einer in der Laufstreifenperipherie liegenden Rippenaußenfläche, wobei die mittlere Profilrippe mit in die eine Umfangsrille einmündenden ersten Sackrillen und mit in die andere Umfangsrille einmündenden, zu den ersten Sackrillen in Umfangsrichtung versetzt ausgebildeten und zu diesen bezüglich der Umfangsrichtung überlappungsfrei verlaufenden, zweiten Sackrillen versehen ist, wobei jede Sackrille durch zwei Rillenflanken, einen Rillengrund sowie eine im Inneren der Profilrippe liegende, zur Rippenaußenfläche verlaufende Endflanke begrenzt ist und eine maximale Breite von 2,5 mm bis 10,0 mm aufweist.

Ein derartiger Fahrzeugluftreifen ist beispielsweise aus der EP 0 588 781 A1 bekannt. Der Fahrzeugluftreifen weist einen Laufstreifen mit einer an jeder Seite von je einer Umfangsrille begrenzten, im Bereich der Reifenäquatorialebene verlaufenden, mittleren Profilrippe und gegenüber dieser deutlich breiter ausgeführten, schulterseitigen Profilbändern auf. In der mittleren Profilrippe sind in die eine Umfangsrille einmündende, erste Sackrillen und in die andere Umfangsrille einmündende, zu den ersten Sackrillen in Umfangsrichtung versetzte und bezüglich der Umfangsrichtung zu diesen überlappungsfrei verlaufende zweite Sackrillen ausgebildet. In den schulterseitigen Profilbändern sind über die seitlichen Ränder der Bodenaufstandsfläche hinausverlaufende Querrillen ausgebildet, welche in einem Abstand vor der jeweiligen Umfangsrille enden. Der Reifen soll für hohe Fahrgeschwindigkeiten geeignet sein und eine gutes Wasserdrainagevermögen sowie gute Handlingeigenschaften aufweisen.

Ein weiterer Fahrzeuglauftreifen der eingangs genannten Art ist aus der EP 0 863 026 A2 bekannt. Der Reifen weist einen laufrichtungsgebundenen Laufstreifen mit einer an jeder Seite von einer Umfangsrille begrenzten, im Bereich der Reifenäquatorialebene verlaufenden, mittleren Profilrippe auf, welche mit in die eine Umfangsrille einmündenden, ersten Sackrillen und in die andere Umfangsrille einmündenden, zu den ersten Sackrillen in Umfangsrichtung versetzten und bezüglich der Umfangsrichtung zu diesen überlappungsfrei verlaufenden, zweiten Sackrillen versehen ist. Die Sackrillen verlaufen durchgehend gebogen.

Aus der EP 3 888 944 A1 ist ein Fahrzeugluftreifen mit einem Laufstreifen mit vier Umfangsrillen, welche fünf Profilrippen voneinander trennen, bekannt. Die mittleren Profilrippen sind jeweils mit in die angrenzenden Umfangsrillen einmündenden Querrillen versehen. Die Querrillen setzten sich, in Draufsicht betrachtet, jeweils aus einem in die eine Umfangsrille einmündenden, randseitigen Abschnitt, einem in die andere Umfangsrille einmündenden, randseitigen Abschnitt und einem zentralen Abschnitt zusammen, wobei der eine randseitige Abschnitt zum anderen randseitigen Abschnitt in Umfangsrichtung versetzt ausgebildet ist. Die Querrillen weisen jeweils eine konstante, maximale Breite von 0,5 mm bis 3,0 mm auf. Die randseitigen Abschnitte weisen eine Tiefe von 60% bis 100% der Tiefe der Umfangsrillen auf. Der zentrale Abschnitt endet in radialer Richtung in einer Tiefe von 5% bis 40% der Tiefe der Umfangsrillen. Der Reifen soll eine gute Entwässerungsperformance sowie ein gleichmäßiges Abriebverhalten aufweisen. Ein weiterer Fahrzeugluftreifen ist aus der EP31732523 A1 bekannt, dessen Laufstreifen drei Umfangsrillen aufweist, welche 4 Profilrippen voneinander trennen. Die mittleren Profilrippen sind jeweils mit in die angrenzenden Umfangsrillen einmündenden Querrillen versehen. Durch die Gestaltung der Rillen in den mittleren Blockreihen soll die Nässeperformance wesentlich verbessert werden.

Profilrippen, welche mit Sackrillen versehen sind und keine durchquerenden Querrillen aufweisen, zeigen -gegenüber Profilrippen mit durchquerenden Querrillen - eine höhere Steifigkeit und sind - da Sackrillen im Gegensatz zu durchquerenden Querrillen der Ausbreitung von Schallwellen am Laufstreifenprofil entgegenwirken - im Hinblick auf das Reifen-Fahrbahn-Geräusch günstig. Auf Schneefahrbahnen kann sich in Sackrillen gut Schnee ansammeln, insbesondere wird dieser effizienter verdichtet als in durchquerenden Querrillen, sodass Sackrillen in dieser Hinsicht für die Traktionseigenschaften auf Schnee besonders vorteilhaft sind.

Profilrippen mit durchquerenden Querrillen sind Profilrippen mit Sackrillen vor allem hinsichtlich ihres Entwässerungsverhaltens überlegen. Im Hinblick auf Schnee-Schnee-Reibung sind durchquerende Querrillen jedoch weniger effektiv.

Zwischen dem Traktionsverhalten auf Schnee sowie der Entwässerungsperformance liegt somit ein Zielkonflikt vor - die Verbesserung der einen Eigenschaft geht üblicherweise mit der Verschlechterung der anderen Eigenschaft einher.

Der Erfindung liegt daher die Aufgabe zugrunde, bei einem Fahrzeugluftreifen der eingangs genannten Art unter Bedachtnahme auf ein möglichst geringes Reifen-Fahrbahn-Geräusch den Zielkonflikt zwischen dem Traktionsverhalten auf Schnee und der Entwässerungsperformance besser als bisher zu lösen.

Gelöst wird die gestellte Aufgabe erfindungsgemäß dadurch, dass die Sackrillen zumindest über einen an die jeweilige Endflanke anschließenden rippeninnenseitigen Grundabschnitt ihres Rillengrundes zu ihren Endflanken seichter werden und im Bereich des rippeninnenseitigen Grundabschnittes ihre kleinste Tiefe aufweisen, wobei von der Rippenaußenfläche ausgehende, schmäler als die Sackrillen ausgeführte, einschnittartige Rillen vorgesehen sind, welche jeweils zwischen einer ersten Sackrille und einer zweiten Sackrille verlaufen, eine Breite von 0,4 mm bis 4,0 mm und eine gegenüber den kleinsten Tiefen der Sackrillen größer ausgeführte maximale Tiefe aufweisen und sich, in Draufsicht betrachtet, jeweils aus drei gerade verlaufenden, miteinander Winkeln von je 100° bis 150° einschließenden Abschnitten zusammensetzen, wobei die maximale Breite der Sackrillen 130% bis 250% der Breite der zwischen ihnen verlaufenden einschnittartigen Rille beträgt.

Die zwischen den Sackrillen verlaufende einschnittartige Rille ist gegenüber den angrenzenden Bereichen der Sackrillen in radialer Richtung tiefer und somit taschenartig ausgeführt, wodurch sich beim Fahren auf Schnee in der einschnittartigen Rille auf effektive Weise Schnee ansammeln kann. Die gewinkelt verlaufenden Abschnitte der einschnittartigen Rille sorgen für einen guten Halt des angesammelten Schnees. Über den Effekt der Schnee-Schnee-Reibung ist somit das Traktionsverhalten auf Schnee verbessert. Gleichzeitig bilden die gewinkelt verlaufenden Abschnitte eine Schallbarriere, sie unterdrücken also die Ausbreitung von Schallwellen durch die gebildete Rillenkombination, sodass ein geringes Reifen-Fahrbahn-Geräusch erhalten bleibt. Beim Fahren auf nasser Fahrbahn nimmt die einschnittartige Rille Wasser auf, trägt daher zur Entwässerung der Profilrippe bei, wobei über die zur einschnittartigen Rille seichter werdenden, daher zu den Umfangsrille tiefer werdenden Sackrillen Wasser zügig in die Umfangsrillen abgeleitet wird. Die Entwässerungsperformance ist daher ebenfalls verbessert.

Gemäß einer bevorzugten Ausführung betragen die Winkel, welche die Abschnitte der einschnittartigen Rillen miteinander einschließen, jeweils 110° bis 140°, bevorzugt 115° bis 135°. Derart gewinkelte einschnittartige Rillen lösen den erwähnten Zielkonflikt zwischen dem Traktionsverhalten auf Schnee und der Entwässerungsperformance auf besonders vorteilhafte Weise.

Gemäß einer weiteren bevorzugten Ausführung liegen die Winkel, welche die Abschnitte der einschnittartigen Rillen miteinander einschließen, an derselben Seite der einschnittartigen Rille.

Im Hinblick auf die Entwässerungsperformance ist es günstig, wenn die maximale Tiefe der einschnittartigen Rillen 55% bis 100%, insbesondere 60% bis 80%, bevorzugt 65% bis 70%, der Profiltiefe beträgt, wobei vorzugsweise zumindest der zentrale Abschnitt jeder einschnittartigen Rille über ihre gesamte Erstreckung auf die maximale Tiefe reicht.

Eine weitere bevorzugten Ausführung ist dadurch gekennzeichnet, dass die kleinste Tiefe jeder Sackrille 10% bis 40%, insbesondere 20% bis 30%, bevorzugt 25% bis 35%, der Profiltiefe beträgt. Die jeweiligen Mindesttiefen sind für die Entwässerungsperformance günstig. Die jeweiligen Maximaltiefen sind im Hinblick auf die Schneeansammlung und die darauffolgende Schneeverdichtung in der einschnittartigen Rille von Vorteil. Die angegebenen Tiefenbereiche führen zu besonders vorteilhaft ausgeglichenen Effekten bezüglich des Traktionsverhaltens auf Schnee und bezüglich der Entwässerungsperformance, sodass diese Ausführung zu einer besonders günstigen Lösung des Zielkonfliktes beiträgt.

Gemäß einer weiteren bevorzugten Ausführung ist die kleinste Tiefe jeder Sackrille um 2,0 mm bis 7,0 mm, insbesondere um 2,0 mm bis 4,0 mm, kleiner als die maximale Tiefe der einschnittartigen Rille. Dies verbessert vor allem die Schneeansammlung und die darauffolgende Schneeverdichtung in der einschnittartigen Rille weiter.

Bevorzugter Weise sind einschnittartige Rillen vorgesehen, welche in die eine Sackrille über eine Rillenflanke und in die andere Sackrille über die Endflanke einmünden.

Eine weitere bevorzugte Ausführung ist dadurch gekennzeichnet, dass die Sackrillen und die einschnittartigen Rillen - bezogen die zugehörige Rillenmittmittellinie - jeweils eine an der Rippenaußenfläche ermittelte, in die axiale Richtung projizierte Länge aufweisen, wobei die Länge der Sackrillen 20% bis 45% der an der Rippenaußenfläche ermittelten, in die axiale Richtung projizierten Breite der Profilrippe beträgt und wobei die Länge der einschnittartigen Rillen 25% bis 55%, insbesondere 35% bis 45%, der an der Rippenaußenfläche ermittelten, in die axiale Richtung projizierten Breite der Profilrippe beträgt.

Ferner trägt es zu einer besonders vorteilhaften Lösung des Zielkonfliktes zwischen dem Traktionsverhalten auf Schnee und der Entwässerungsperformance bei, wenn der rippeninnenseitige Grundabschnitt des Rillengrundes der Sackrillen eine an der Rippenaußenfläche ermittelte, auf die Rillenmittellinie bezogene, in die axiale Richtung projizierte Länge von 65% bis 90% der auf die Rillenmittellinie bezogenen, in axiale Richtung projizierten Länge der Sackrille aufweist.

Für die Entwässerung ist ferner günstig, wenn der rippeninnenseitige Grundabschnitt des Rillengrundes der Sackrillen, im entlang der Rillenmittellinie ausgerichteten Längsschnitt durch die Sackrillen betrachtet, zur radialen Richtung unter einem konstanten Winkel verläuft.

Gemäß einer weiteren bevorzugten Ausführung setzt sich der Rillengrund der Sackrillen aus dem rippeninnenseitigen Grundabschnitt und einem rippenaußenseitigen Grundabschnitt zusammen, wobei der rippenaußenseitige Grundabschnitt, im entlang der Rillenmittellinie ausgerichteten Längsschnitt durch die Sackrillen betrachtet, zum Niveau der Profiltiefe in radialer Richtung einen konstanten Abstand von 1,0 mm bis 2,0 mm, insbesondere von 1,3 mm bis 1,7 mm aufweist. Dies trägt zur Aufrechterhaltung einer gewissen Steifigkeit an den Randbereichen der Profilrippe bei und ist für die Traktionseigenschaften auf Schnee günstig.

Bevorzugt weisen die ersten Sackrillen zu den zweiten Sackrillen einen zwischen den Endflanken in Umfangsrichtung ermittelten Versatz von 3,0 mm bis 15,0 mm, insbesondere von 4,0 mm bis 10,0 mm, auf, wobei die einschnittartigen Rillen zwischen diesen Versatz zueinander aufweisenden Sackrillen verlaufen. Der Versatz ist einerseits für das Reifen-Fahrbahn-Geräusch vorteilhaft, wobei ferner innerhalb der Rillenkombination für das Entwässerungsverhalt besonders vorteilhafte, kurze Drainagewege gebildet sind.

Gemäß einer weiteren bevorzugten Ausführung beträgt die maximale Breite der Sackrillen 3,0 mm bis 5,0 mm, wobei die maximale Breite der Sackrillen insbesondere 180% bis 220% der Breite der zwischen ihnen verlaufenden einschnittartigen Rille beträgt. In der entsprechend schmalen, einschnittartigen Rille kann sich Schnee besonders effektiv ansammeln. Die entsprechend breiten Sackrillen sind für die Entwässerung günstig.

Gemäß einer weiteren bevorzugten Ausführung verlaufen die Sackrillen, in Draufsicht betrachtet, gerade sowie bezüglich der axialen Richtung gegensinnig zueinander geneigt, wobei die ersten Sackrillen zur axialen Richtung unter einem Winkel von 5 bis 25°, insbesondere von 10° bis 20°, und die zweiten Sackrillen zur axialen Richtung unter einem Winkel von 25° bis 45°, insbesondere von 30° bis 40°, verlaufen. Dies ist für das Reifen-Fahrbahn-Geräusch sowie für die Entwässerung vorteilhaft.

Durch die Sackrillen und einschnittartigen Rillen ist die mittlere Profilrippe in in Umfangsrichtung aufeinanderfolgende Rippenblöcke strukturiert. Bevorzugter Weise ist jeder Rippenblock mit zumindest zwei, bevorzugt mit drei, Einschnitten mit einer Breite von 0,4 mm bis 1,0 mm und einer Tiefe von 30% bis 90% der Profiltiefe versehen, wobei zu diesen Einschnitten Einschnitte gehören, welche im Bereich des rippeninnenseitigen Grundabschnittes in die Sackrillen einmünden und wobei zu diesen Einschnitten vorzugsweise Einschnitte gehören, welche zusätzlich zu einer Umfangsrille verlaufen. Solche Einschnitte verbessern die Entwässerung der Profilrippe zusätzlich.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen in die Ebene abgewickelten Ausschnitt eines Laufstreifens eines Fahrzeugluftreifens mit einer Ausführungsvariante der Erfindung,
Fig. 2 einen Schnitt entlang der Linie II-II der Fig. 1,
Fig. 3 einen Schnitt entlang der Linie III-III der Fig. 1,
Fig. 4 eine vergrößerte Draufsicht auf das Detail Z₄ der Fig. 1,
Fig. 5 einen Schnitt entlang der Linie V-V der Fig. 4,
Fig. 6 einen Schnitt entlang der Linie VI-VI der Fig. 4,
Fig. 7 einen Schnitt entlang der Linie VII-VII der Fig. 4 und
Fig. 8 einen Schnitt entlang der Linie VIII-VIII der Fig. 4.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, leichte LKWs mit zGM ≤ 7,5 t).

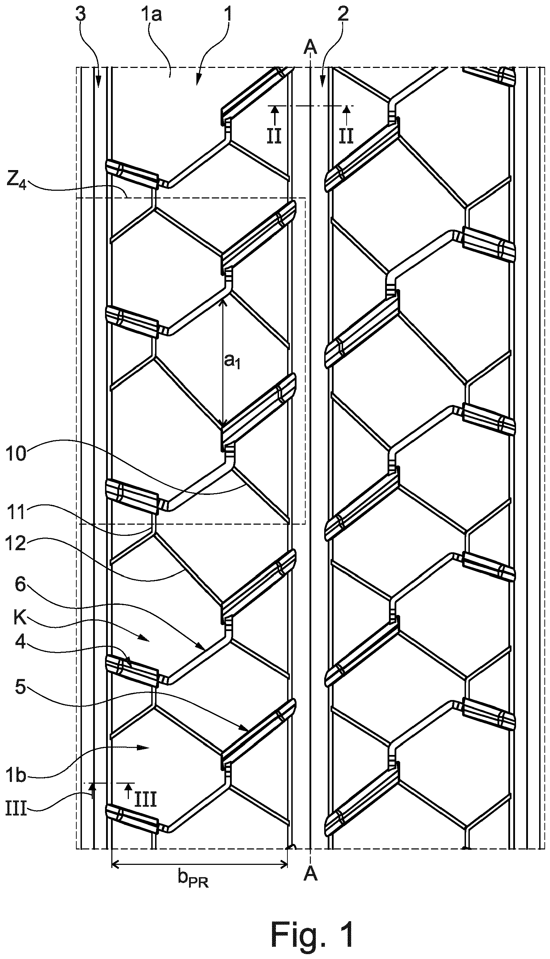

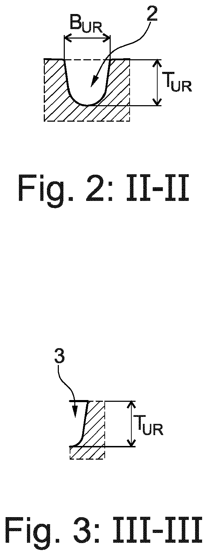

Fig. 1 zeigt eine Draufsicht auf einen zentralen Ausschnitt eines Laufstreifens eines Fahrzeugluftreifens. Die Reifenäquatorialebene ist durch eine Linie A-A angedeutet. Der Laufstreifen weist zwei in Umfangsrichtung umlaufende mittlere Profilrippen 1 auf, welche durch eine in Draufsicht gerade verlaufende, zentrale Umfangsrille 2 getrennt und laufstreifenaußenseitig jeweils durch eine in Draufsicht gerade verlaufende schulterseitige Umfangsrille 3 zu nicht gezeigten schulterseitigen Profilrippen begrenzt sind. Die Umfangsrillen 2, 3 sind jeweils in der vorgesehenen Profiltiefe T_{UR} (Fig. 2, Fig. 3) ausgeführt, welche für den bevorzugten Reifentyp üblicherweise 6,5 mm bis 13,0 mm beträgt, und weisen an der Laufstreifenperipherie in axialer Richtung jeweils eine Breite B_{UR} (Fig. 2, gezeigt für die zentrale Umfangsrille 2) von vorzugsweise 6,0 mm bis 13,0 mm auf. Sind die Umfangsrillen 2, 3 verschieden tief ausgeführt, wird unter der Profiltiefe T_{UR} die Tiefe der tieferen Umfangsrille 2, 3 verstanden.

Die Ausgestaltung der mittleren Profilrippen 1, auf welche noch genauer eingegangen wird, ist beim Ausführungsbeispiel derart, dass die eine mittlere Profilrippe 1 durch eine 180°-Drehung in die andere mittlere Profilrippe 1 überführbar ist. Bevorzugter Weise sind die nicht gezeigten schulterseitigen Profilrippen in analoger Weise zu den mittleren Profilrippen 1 asymmetrisch ausgeführt, sodass der Laufstreifen bezüglich der Reifenäquatorialebene (Linie A-A) eine asymmetrische Gestalt aufweist und der Fahrzeugluftreifen keine bevorzugte Orientierung auf der Achse des Fahrzeuges besitzt.

Jede mittlere Profilrippe 1 weist eine in der Laufstreifenperipherie liegende Rippenaußenfläche 1a sowie eine an der Rippenaußenfläche 1a in axialer Richtung ermittelte Breite b_{PR} auf und ist mit einer Anzahl von in Umfangsrichtung aufeinanderfolgenden Sackrillen 4 und einer Anzahl von in Umfangsrichtung aufeinanderfolgenden Sackrillen 5 versehen, wobei die Anzahl der Sackrillen 4 mit der Anzahl der Sackrillen 5 übereinstimmt. Die Sackrillen 4 verlaufen, betrachtet in Draufsicht auf den Laufstreifen und vertikal verlaufender Reifenäquatorialebene (Linie A-A), parallel zueinander, gerade sowie linkssteigend, also von rechts unten nach links oben, und münden in die jeweilige schulterseitige Umfangsrille 3 ein. Die Sackrillen 5 verlaufen, in der erwähnten Draufsicht betrachtet, parallel zueinander, gerade sowie rechtssteigend, also von links unten nach rechts oben, münden in die zentrale Umfangsrille 2 ein, sind zu den Sackrillen 4 in Umfangsrichtung versetzt und verlaufen bezüglich der Umfangsrichtung überlappungsfrei zu den Sackrillen 4. "Überlappungsfrei verlaufen" bedeutet, dass zwischen den Sackrillen 4 und den Sackrillen 5 ein von Sackrillen 4, 5 freier Umfangsabschnitt (in Umfangsrichtung umlaufender Abschnitt) der jeweiligen mittleren Profilrippe 1 vorhanden ist. Die Sackrillen 5 aus der einen mittleren Profilrippe 1 verlaufen im Wesentlichen in Fortsetzung zu den Sackrillen 5 aus der anderen mittleren Profilrippe 1.

In jeder mittleren Profilrippe 1 sind darüber hinaus in Draufsicht parallel zueinander sowie jeweils zwischen einer Sackrille 4 und einer Sackrille 5 verlaufende einschnittartige Rillen 6 ausgebildet, wobei zwischen sämtlichen Sackrillen 4, 5 einschnittartige Rillen 6 verlaufen und wobei je eine einschnittartige Rille 6 gemeinsam mit den anschließenden Sackrillen 4, 5 eine die jeweilige mittlere Profilrippe 1 durchquerende Rillenkombination K bildet. Die Rillenkombinationen K strukturieren die jeweilige mittlere Profilrippe 1 in in Umfangsrichtung aufeinanderfolgende Rippenblöcke 1b, wobei in Umfangsrichtung aufeinanderfolgende Rillenkombinationen K in Umfangsrichtung voneinander als kleinstmögliche Abstände ermittelte gegenseitige Abstände a₁ von vorzugsweise 20,0 mm bis 35,0 mm aufweisen.

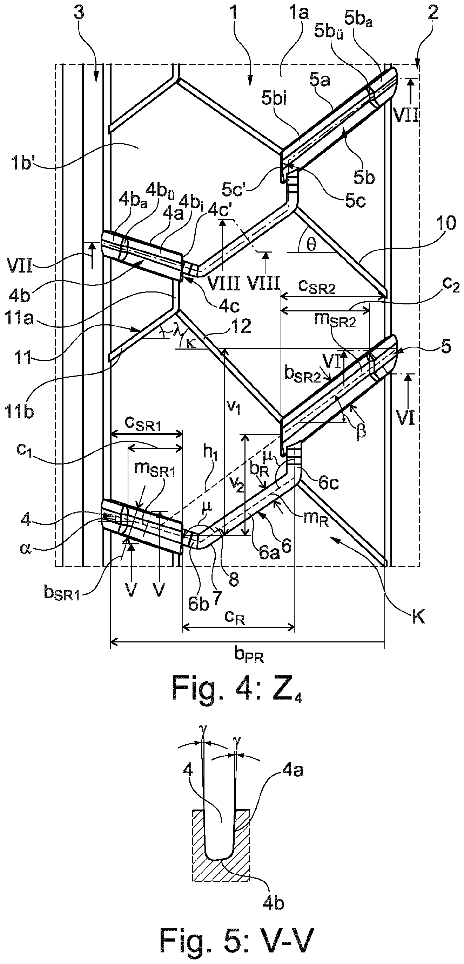

Gemäß Fig. 4 erstrecken sich die linkssteigend verlaufenden Sackrillen 4, betrachtet in Draufsicht und jeweils bezogen auf eine dem Rillenverlauf folgende Rillenmittellinie m_{SR1}, zur axialen Richtung unter einem Winkel α von 5° bis 25°, insbesondere von 10° bis 20°, und die rechtssteigend verlaufenden Sackrillen 5 erstrecken sich, in der erwähnten Draufsicht betrachtet und jeweils bezogen auf eine dem Rillenverlauf folgende Rillenmittellinie m_{SR2}, zur axialen Richtung unter einem Winkel β von 25° bis 45°, insbesondere von 30° bis 40°. Die zur selben Rillenkombination K gehörenden Sackrillen 4, 5 sind derart in Umfangsrichtung versetzt ausgebildet, dass zwischen jenen Enden der Sackrillen 4, 5, welche voneinander in Umfangsrichtung am weitesten voneinander beabstandet sind, beim Ausführungsbeispiel sind diese Enden das rippeninnenseitige Ende der Sackrille 4 und das rippenaußenseitige Ende der Sackrille 5, ein in Umfangsrichtung ermittelter, auf die Rillenmittelinien m_{SR1}, m_{SR2} bezogener größter Versatz v₁ vorliegt.

Die weitere Ausgestaltung der Rillenkombinationen K wird nachfolgend anhand einer einzelnen Rillenkombination K erläutert.

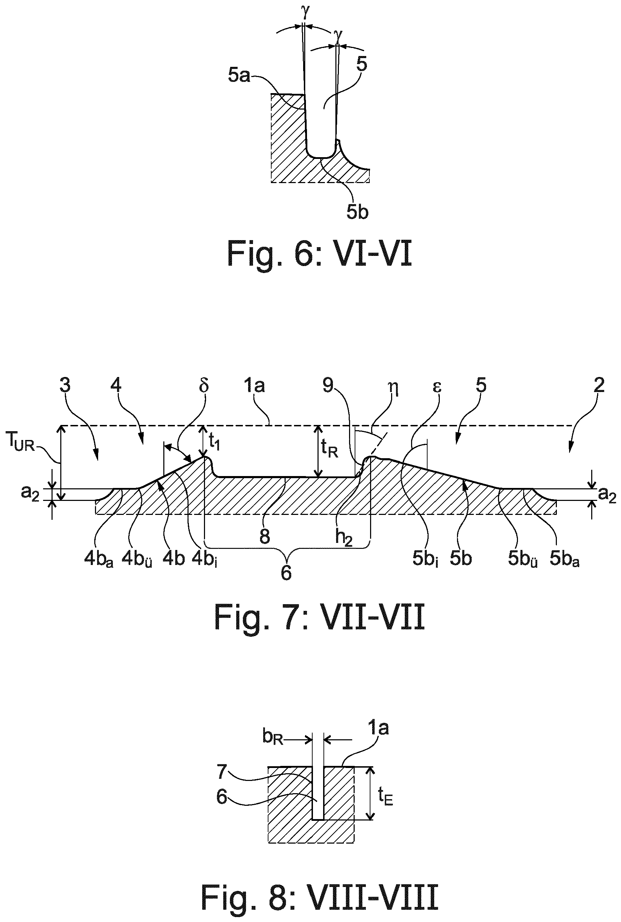

Wie Fig. 4 zeigt, weist die Sackrille 4, 5 - jeweils ermittelt am Niveau der Rippenaußenfläche 1a - eine senkrecht zur Rillenmittellinie m_{SR1}, m_{SR2} gemessene maximale Breite b_{SR1} (Sackrille 4), b_{SR2} (Sackrille 5) von 2,5 mm bis 10,0 mm, insbesondere von 3,0 mm bis 5,0 mm, und eine auf die Rillenmittellinie m_{SR1}, m_{SR2} bezogene, in die axiale Richtung projizierte Länge c_{SR1} (Sackrille 4), c_{SR2} (Sackrille 5) auf, wobei die Länge c_{SR1} 20% bis 45%, insbesondere bis zu 30%, der bereits erwähnten Breite b_{PR} der mittleren Profilrippe 1 und die Länge c_{SR2} 20% bis 45%, insbesondere 30% bis 40%, bevorzugt zumindest 35%, der Breite b_{PR} der mittleren Profilrippe 1 beträgt. Die Sackrille 4, 5 ist durch zwei Rillenflanken 4a (Sackrille 4, vergl. Fig. 5), 5a (Sackrille 5, vergl. Fig. 6), einen Rillengrund 4b (Sackrille 4, vergl. Fig. 5), 5b (Sackrille 5, vergl. Fig. 6) und eine im Inneren der mittleren Profilrippe 1 liegende Endflanke 4c (Sackrille 4), 5c (Sackrille 5) begrenzt. Die zur selben Rillenkombination K gehörenden Sackrillen 4, 5 weisen einen zwischen ihren Endflanken 4c, 5c in Umfangsrichtung ermittelten, auf die Rillenmittellinien m_{SR1}, m_{SR2} bezogenen Versatz v₂ von vorzugsweise 3,0 mm bis 15,0 mm, besonders bevorzugt von 4,0 mm bis 10,0 mm, auf. Die bereits erwähnten Winkel α und β sowie der Versatz v₂ sind insbesondere derart aufeinander abgestimmt, dass eine in Draufsicht in geradliniger Verlängerung der Rillenmittellinie m_{SR2} verlaufende Hilfslinie h₁ die Rillenmittellinie m_{SR1} schneidet.

Gemäß Fig. 5 und Fig. 6 verlaufen die Rillenflanken 4a, 5a, im in Draufsicht senkrecht zur zugehörigen Rillenmittellinie m_{SR1}, m_{SR2} ausgerichteten Querschnitt betrachtet, zur radialen Richtung unter vorzugsweise übereinstimmenden Winkeln γ von 0° bis 5°, insbesondere von 1° bis 3°.

Der Rillengrund 4b, 5b ist, im zuletzt erwähnten Querschnitt betrachtet, flach U-förmig ausgeführt und setzt sich - wie Fig. 7 in Kombination mit Fig. 4 zeigt - im entlang der jeweiligen Rillenmittellinie m_{SR1}, m_{SR2} ausgerichteten Längsschnitt durch die Sackrille 4, 5 betrachtet, aus einem zur schulterseitigen Umfangsrille 3 (Sackrille 4) bzw. zur zentralen Umfangsrille 2 (Sackrille 5) verlaufenden, rippenaußenseitigen Grundabschnitt 4bₐ (Rillengrund 4b), 5bₐ (Rillengrund 5b), einem an die Endflanke 4c bzw. 5c anschließenden, rampenartig verlaufenden, rippeninnenseitigen Grundabschnitt 4bᵢ (Rillengrund 4b), 5bᵢ (Rillengrund 5b) sowie einer zwischen den beiden Grundabschnitten 4bₐ, 4bᵢ bzw. 5bₐ, 5bᵢ ausgebildeten, optionalen Übergangsrundung 4bü (Rillengrund 4b), 5bü (Rillengrund 5b) zusammen. Gemäß Fig. 7 weist der rippenaußenseitige Grundabschnitt 4bₐ, 5bₐ, im erwähnten Längsschnitt betrachtet, zum Niveau der Profiltiefe T_{UR} in radialer Richtung einen konstanten Abstand a₂ von 1,0 mm bis 2,0 mm, insbesondere von 1,3 mm bis 1,7 mm, auf. Der rippeninnenseitige Grundabschnitt 4bᵢ, 5bᵢ weist eine am Niveau der Rippenaußenfläche 1a ermittelte, auf die entsprechende Rillenmittellinie m_{SR1}, m_{SR2} bezogene, in die axiale Richtung projizierte Länge c₁ (Fig. 4, Grundabschnitt 4bᵢ), c₂ (Fig. 4, Grundabschnitt 5bᵢ) auf, wobei die Länge c₁ 65% bis 85% der Länge c_{SR1} (Fig. 4) der Sackrille 4 und die Länge c₂ 80% bis 90% der Länge c_{SR2} (Fig. 4) der Sackrille 5 beträgt. Der rippeninnenseitige Grundabschnitt 4bᵢ, 5bᵢ ist, im erwähnten Längsschnitt betrachtet, zur radialen Richtung unter einem konstanten Winkel δ (Grundabschnitt 4bᵢ), ε (Grundabschnitt 5bᵢ) geneigt, wobei die Neigung derart ist, dass die Sackrille 4, 5 über die Erstreckung des Grundabschnittes 4bᵢ, 5bᵢ ausgehend vom näher zur Umfangsrille 2 bzw. 3 liegenden, rippenaußenseitigen Ende des Grundabschnittes 4bᵢ, 5bᵢ in Richtung zur Endflanke 4c, 5c (Fig. 4) kontinuierlich seichter wird und im Bereich des Grundabschnittes 4bᵢ, 5bᵢ eine in radialer Richtung ermittelte kleinste Tiefe t₁ (Tiefe an der seichtesten Stelle, nur für den Grundabschnitt 4bᵢ gezeigt) von 10% bis 40%, insbesondere von 20% bis 30%, bevorzugt von 25% bis 35%, der Profiltiefe T_{UR} aufweist. Die in Fig. 7 an dem einen Ende des rippeninnenseitigen Grundabschnittes 5bᵢ kaum sichtbare Einbuchtung ist lediglich eine Folge der Lage der Schnittlinie VII-VII (siehe Fig. 4 und vergl. Rundung des Rillengrundes 5b in Fig. 6).

Die Endflanke 4c, 5c verläuft, im erwähnten Längsschnitt betrachtet, in radialer Richtung oder zu dieser unter einem Winkel von bis zu 3° und weist an der Rippenaußenfläche 1a eine Begrenzungskante 4c' (Fig. 4, Endflanke 4c), 5c' (Fig. 4, Endflanke 5c) auf, welche, in Draufsicht betrachtet, zur Umfangsrichtung unter einem Winkel von 0° bis +/- 3°, insbesondere von 0°, verläuft.

Gemäß Fig. 4 verläuft die bereits erwähnte einschnittartige Rille 6 derart, dass sie von der ebenfalls bereits erwähnten Hilfslinie h₁ nicht geschnitten ist, wobei die einschnittartige Rille 6 über die Endflanke 4c in die linkssteigend verlaufende Sackrille 4 und über die entsprechende Rillenflanke 5a in die rechtssteigend verlaufende Sackrille 5 einmündet. Die einschnittartige Rille 6 setzt sich, in Draufsicht betrachtet, aus einem gerade verlaufenden zentralen Abschnitt 6a, einem gerade sowie zur Endflanke 4c verlaufenden seitlichen Abschnitt 6b und einem gerade sowie zur Rillenflanke 5a verlaufenden seitlichen Abschnitt 6c zusammen, wobei der zentrale Abschnitt 6a mit jedem seitlichen Abschnitt 6b, 6c - bezogen auf eine in Draufsicht dem Rillenverlauf folgende Rillenmittmittellinie m_{R}-jeweils einen Winkel µ von 100° bis 150°, insbesondere von 110° bis 140°, bevorzugt von 115° bis 135°, einschließt und die einschnittartige Rille 6 insgesamt trapezförmig verläuft, sodass die Winkeln µ an derselben Seite der Rillenmittellinie m_{R} vorliegen. Die einschnittartige Rille 6 ist durch zwei in radialer Richtung verlaufende Rillenflanke 7 (vergl. Fig. 8), einen Rillengrund 8 und zwei an den Sackrillen 4, 5 liegenden Endflanken 9 (Fig. 7) begrenzt.

Die einschnittartige Rille 6 weist zwischen den Rillenflanken 7 eine konstante Breite b_{R} (vergl. Fig. 8) von 0,4 mm bis 4,0 mm, bevorzugt von 0,8 mm bis 2,0 mm, insbesondere von bis zu 1,2 mm, eine am Niveau der Rippenaußenfläche 1a ermittelte, auf die Rillenmittellinie m_{R} bezogene, in die axiale Richtung projizierte Länge c_{R} von 25% bis 55%, bevorzugt von 35% bis 45%, der Breite b_{PR} der Profilrippe 1 und - wie Fig. 8 zeigt - in radialer Richtung eine gegenüber dem Niveau der Rippenaußenfläche 1a ermittelte, größer als die erwähnten kleinsten Tiefen t₁ der Sackrillen 4, 5 ausgeführte maximale Tiefe t_{R} (Tiefe an der tiefsten Stelle) von 55% bis 100%, insbesondere 60% bis 80%, bevorzugt 65% bis 70%, Profiltiefe T_{UR} auf, wobei die Rille 6, im entlang der Rillenmittellinie m_{R} verlaufenden Längsschnitt betrachtet, wannenförmig ausgeführt ist.

Die maximale Tiefe t_{R} der einschnittartigen Rille 6 und die bereits erwähnte, kleinste Tiefe t₁ jeder Sackrille 4, 5 sind vorzugsweise derart aufeinander abgestimmt, dass kleinste Tiefe t₁ jeder Sackrille 4, 5 um 2,0 mm bis 7,0 mm, insbesondere um 2,0 mm bis 4,0 mm, kleiner ist als die maximale Tiefe t_{R} der Rille 6.

Der zentrale Abschnitt 6a verläuft, in Draufsicht betrachtet, zumindest über den Großteil der Länge c_{R} der Rille 6 sowie parallel zur Sackrille 5 und reicht über seine gesamte Erstreckung auf die erwähnte maximale Tiefe t_{R} (vergl. Fig. 7). Gemäß Fig. 4 verläuft der seitliche Abschnitt 6b in Draufsicht und bezogen auf die Rillenmittellinie m_{R} in Verlängerung der Rillenmittelline m_{SR1} der Sackrille 4. Der seitliche Abschnitt 6c verläuft in Draufsicht und bezogen auf die Rillenmittellinie m_{R} in Umfangsrichtung. Der Rillengrund 8 verläuft auf der erwähnten maximalen Tiefe t_{R} (vergl. Fig. 7), endet an den seitlichen Abschnitten 6b, 6c oder kann - wie in Fig. 4 gezeigt - in die seitlichen Abschnitte 6b, 6c geringfügig hineinverlaufen.

Wie Fig. 7 zeigt, sind die Endflanken 9, im entlang der Rillenmittellinie m_{R} ausgerichteten Längsschnitt betrachtet, in radialer Richtung langgestreckt S-förmig, schließen sowohl stetig (knickfrei) an den Rillengrund 8 als auch stetig an die Grundabschnitt 4bᵢ bzw. 5bᵢ an und verlaufen - jeweils bezogen auf eine ihre beiden Enden verbindende gerade Hilfslinie h₂ - zur radialen Richtung unter einem Winkel η von 30° bis 50°, insbesondere von 35° bis 45°. Alternativ können die Endflanken 9 an ihrem an der Sackrille 4, 5 liegenden radial äußeren Ende eine scharfe Mündungskante aufweisen, sodass diese nicht stetig an den jeweiligen Grundabschnitt 4bᵢ, 5bᵢ anschließen.

Wie Fig. 1 zeigt, sind beim gezeigten Ausführungsbeispiel in jedem Rippenblock 1b jeweils drei Einschnitte 10, 11, 12 mit einer Breite von 0,4 mm bis 1,0 mm und einer Tiefe von 30% bis 90% der Profiltiefe T_{UR} (Fig. 2, Fig. 3) ausgebildet. Gemäß Fig. 4 gehen die Einschnitte 10, 11 von derselben Rillenkombination K aus, wobei der Einschnitt 10, in Draufsicht betrachtet, gerade, zur axialen Richtung unter einem Winkel θ von 35° bis 55° sowie zwischen der entsprechenden Rille 6 und der zentralen Umfangsrille 2 verläuft und wobei der Einschnitt 10 an der Knickaußenseite des gegenseitigen Anschlussbereiches der Abschnitte 6a, 6c in die Rille 6 einmündet. Der Einschnitt 11 verläuft zwischen der Sackrille 4 und der jeweiligen schulterseitigen Umfangsrille 3 und setzt sich, in Draufsicht betrachtet, aus einem in Umfangsrichtung verlaufenden, an die Sackrille 4 anschließenden Einschnittabschnitt 11a und einem zur schulterseitigen Umfangsrille 3 sowie zur axialen Richtung unter einem Winkel λ von 25° bis 45° verlaufenden Einschnittabschnitt 11b zusammen. Der Einschnitt 12 verläuft, in Draufsicht betrachtet, gerade sowie zur axialen Richtung unter einem Winkel κ von 35° bis 55°, mündet am gegenseitigen Anschlussbereich der Einschnittabschnitte 11a, 11b in den Einschnitt 11 ein oder endet knapp vor dem Einschnitt 11 und verläuft zur Sackrille 5 von jener Rillenkombination K, von welcher die Einschnitte 10, 11 in diesem Rippenblock 1b nicht ausgehen. Die Einschnitte 11, 12 verleihen jedem Rippenblock 1b vier Blocksegmente 1b'.

Die Erfindung ist auf das beschriebene Ausführungsbeispiel nicht beschränkt.

Insbesondere sind die Einschnitte optional. Es ist zumindest eine mittlere Profilrippe mit Sackrillen und zwischen diesen verlaufenden einschnittartigen Rillen vorgesehen. Die einschnittartigen Rillen, welche zwischen den Sackrillen verlaufen, können sich auch derart aus drei Abschnitten zusammensetzen, dass diese nicht trapezförmig, sondern zick-zack-förmig, also schwach Z-förmig bzw. gespiegelt Z-förmig, verlaufen. Die Umfangsrillen können in Draufsicht jeweils wellen- oder zick-zack-förmig verlaufen. Ist zumindest eine derart verlaufende, die zumindest eine mittlere Profilrippe mitbegrenzende Umfangsrille vorgesehen, ist die an der Rippenaußenfläche in axialer Richtung ermittelte Breite der Profilrippe als maximale Breite (Breite an der bzw. den breitesten Stelle(n) der Profilrippe) ermittelt.

### Bezugszeichenliste

- 1: mittlere Profilrippe
- 1a: Rippenaußenfläche
- 1b: Rippenblock
- 1b': Blocksegment
- 2: zentrale Umfangsrille
- 3: schulterseitige Umfangsrille
- 4: Sackrille
- 4a: Rillenflanke
- 4b: Rillengrund
- 4bₐ: rippenaußenseitiger Grundabschnitt
- 4bᵢ: rippeninnenseitiger Grundabschnitt
- 4b_{ü}: Übergangsrundung
- 4c: Endflanke
- 4c: Begrenzungskante
- 5: Sackrille
- 5a: Rillenflanke
- 5b: Rillengrund
- 5b: rippenaußenseitiger Grundabschnitt
- 5bᵢ: rippeninnenseitiger Grundabschnitt
- 5b_{ü}: Übergangsrundung
- 5c: Endflanke
- 5c': Begrenzungskante
- 6.: einschnittartige Rille
- 6a: zentraler Abschnitt
- 6b: seitlicher Abschnitt
- 6c: seitlicher Abschnitt
- 7: Rillenflanke
- 8: Rillengrund
- 9: Endflanke
- 10: Einschnitt
- 11: Einschnitt
- 11a: Einschnittabschnitt
- 11b: Einschnittabschnitt
- 12: Einschnitt
- A-A: Linie (Reifenäquatorialebene)
- a₁, a₂: Abstand
- b_{R}, b_{PR}: Breite
- b_{SR1}, b_{SR2}: maximale Breite
- B_{UR}: Breite
- c₁, c₂: Länge
- c_{R}: Länge
- c_{SR1}, c_{SR2}: Länge
- h₁, h₂: Hilfslinie
- K: Rillenkombination
- m_{R}, m_{SR1}, m_{SR2}: Rillenmittellinie
- t₁: kleinste Tiefe
- t_{R}: maximale Tiefe
- T_{UR}: Profiltiefe
- v₁: größter Versatz
- v₂: Versatz
- Z₄: Detail
- α, β, γ, δ, ε, η, θ, λ, κ, µ: Winkel

## Patentansprüche

1. Fahrzeugluftreifen mit einem Laufstreifen mit zumindest einer, an jeder Seite von einer Umfangsrille (2, 3) begrenzten mittleren Profilrippe (1) mit einer in der Laufstreifenperipherie liegenden Rippenaußenfläche (1a), wobei die mittlere Profilrippe (1) mit in die eine Umfangsrille (3) einmündenden ersten Sackrillen (4) und mit in die andere Umfangsrille (2) einmündenden, zu den ersten Sackrillen (4) in Umfangsrichtung versetzt ausgebildeten und zu diesen bezüglich der Umfangsrichtung überlappungsfrei verlaufenden, zweiten Sackrillen (5) versehen ist, wobei jede Sackrille (4, 5) durch zwei Rillenflanken (4a, 5a), einen Rillengrund (4b, 5b) sowie eine im Inneren der Profilrippe (1) liegende, zur Rippenaußenfläche (1a) verlaufende Endflanke (4c, 5c) begrenzt ist und eine maximale Breite (b_{SR1}, b_{SR2}) von 2,5 mm bis 10,0 mm aufweist,
wobei die Sackrillen (4, 5) zumindest über einen an die jeweilige Endflanke (4c, 5c) anschließenden rippeninnenseitigen Grundabschnitt (4bᵢ, 5bᵢ) ihres Rillengrundes (4b, 5b) zu ihren Endflanken (4c, 5c) seichter werden und im Bereich des rippeninnenseitigen Grundabschnittes (4bᵢ, 5bᵢ) ihre kleinste Tiefe (t₁) aufweisen, wobei von der Rippenaußenfläche (1a) ausgehende, schmäler als die Sackrillen (4, 5) ausgeführte, einschnittartige Rillen (6) vorgesehen sind, welche jeweils zwischen einer ersten Sackrille (4) und einer zweiten Sackrille (5) verlaufen, und eine Breite (b_{R}) von 0,4 mm bis 4,0 mm aufweisen,
**dadurch gekennzeichnet,**
**dass** die einschnittartigen Rillen (6)
eine gegenüber den kleinsten Tiefen (t₁) der Sackrillen (4, 5) größer ausgeführte maximale Tiefe (t_{R}) aufweisen und sich, in Draufsicht betrachtet, jeweils aus drei gerade verlaufenden, miteinander Winkeln (µ) von je 100° bis 150° einschließenden Abschnitten (6a, 6b, 6c) zusammensetzen, wobei die maximale Breite (b_{SR1}, b_{SR2}) der Sackrillen (4, 5) 130% bis 250% der Breite (b_{R}) der zwischen ihnen verlaufenden einschnittartigen Rille (6) beträgt.

2. Fahrzeugluftreifen nach Anspruch 1, **dadurch gekenzeichnet,**
dass die Winkel (µ), welche die Abschnitte (6a, 6b, 6c) der einschnittartigen Rillen (6) miteinander einschließen, jeweils 110° bis 140°, bevorzugt 115° bis 135°, betragen.

3. Fahrzeugluftreifen nach Anspruch 1 oder 2, **dadurch gekenzeichnet**, dass die Winkel (µ), welche die Abschnitte (6a, 6b, 6c) der einschnittartigen Rillen (6) miteinander einschließen, an derselben Seite der einschnittartigen Rille (6) liegen.

4. Fahrzeugluftreifen nach einem der Ansprüche 1 bis 3, **dadurch gekenzeichnet**, dass die maximale Tiefe (t_{R}) der einschnittartigen Rillen (6) 55% bis 100%, insbesondere 60% bis 80%, bevorzugt 65% bis 70%, der Profiltiefe (T_{UR}) beträgt, wobei vorzugsweise zumindest der zentrale Abschnitt (6a) jeder einschnittartigen Rille (6) über ihre gesamte Erstreckung auf die maximale Tiefe (t_{R}) reicht.

5. Fahrzeugluftreifen nach einem der Ansprüche 1 bis 4,
**dadurch gekenzeichnet**, dass die kleinste Tiefe (t₁) jeder Sackrille (4, 5) 10% bis 40%, insbesondere 20% bis 30%, bevorzugt 25% bis 35%, der Profiltiefe (T_{UR}) beträgt.

6. Fahrzeugluftreifen nach einem der Ansprüche 1 bis 5, **dadurch gekenzeichnet**, dass die kleinste Tiefe (t₁) jeder Sackrille (4, 5) um 2,0 mm bis 7,0 mm, insbesondere um 2,0 mm bis 4,0 mm, kleiner ist als die maximale Tiefe (t_{R}) der einschnittartigen Rille (6).

7. Fahrzeugluftreifen nach einem der Ansprüche 1 bis 6, **dadurch gekenzeichnet**, dass einschnittartige Rillen (6) vorgesehen sind, welche in die eine Sackrille (5) über eine Rillenflanke (5a) und in die andere Sackrille (4) über die Endflanke (4c) einmünden.

8. Fahrzeugluftreifen nach einem der Ansprüche 1 bis 7, **dadurch gekenzeichnet**, dass die Sackrillen (4, 5) und die einschnittartigen Rillen (6) - bezogen die zugehörige Rillenmittmittellinie (m_{SR1}, m_{SR2}, m_{R}) - jeweils eine an der Rippenaußenfläche (1a) ermittelte, in die axiale Richtung projizierte Länge (c_{SR1}, c_{SR2}, c_{R}) aufweisen, wobei die Länge (c_{SR1}, c_{SR2}) der Sackrillen (4, 5) 20% bis 45% der an der Rippenaußenfläche (1a) ermittelten, in die axiale Richtung projizierten Breite (b_{PR}) der Profilrippe (1) beträgt und wobei die Länge (c_{R}) der einschnittartigen Rillen (6) 25% bis 55%, insbesondere 35% bis 45%, der an der Rippenaußenfläche (1a) ermittelten, in die axiale Richtung projizierten Breite (b_{PR}) der Profilrippe (1) beträgt.

9. Fahrzeugluftreifen nach einem der Ansprüche 1 bis 8, **dadurch gekenzeichnet**, dass der rippeninnenseitige Grundabschnitt (4bᵢ, 5bᵢ) des Rillengrundes (4b, 5b) der Sackrillen (4, 5) eine an der Rippenaußenfläche (1a) ermittelte, auf die Rillenmittellinie (m_{SR1}, m_{SR2}) bezogene, in die axiale Richtung projizierte Länge (c₁, c₂) von 65% bis 90% der auf die Rillenmittellinie (m_{SR1}, m_{SR2}) bezogenen, in axiale Richtung projizierten Länge (c_{SR1}, c_{SR2}) der Sackrille (4, 5) aufweist.

10. Fahrzeugluftreifen nach einem der Ansprüche 1 bis 9, **dadurch gekenzeichnet**, dass der rippeninnenseitige Grundabschnitt (4bᵢ, 5bᵢ) des Rillengrundes (4b, 5b) der Sackrillen (4, 5), im entlang der Rillenmittellinie (m_{SR1}, m_{SR2}) ausgerichteten Längsschnitt durch die Sackrillen (4, 5) betrachtet, zur radialen Richtung unter einem konstanten Winkel (δ, ε) verläuft.

11. Fahrzeugluftreifen nach einem der Ansprüche 1 bis 10, **dadurch gekenzeichnet**, dass sich der Rillengrund (4b, 5b) der Sackrillen (4, 5) aus dem rippeninnenseitigen Grundabschnitt (4bᵢ, 5bᵢ) und einem rippenaußenseitigen Grundabschnitt (4bₐ, 5bₐ) zusammensetzt, wobei der rippenaußenseitige Grundabschnitt (4bₐ, 5bₐ), im entlang der Rillenmittellinie (m_{SR1}, m_{SR2}) ausgerichteten Längsschnitt durch die Sackrillen (4, 5) betrachtet, zum Niveau der Profiltiefe (T_{UR}) in radialer Richtung einen konstanten Abstand (a₂) von 1,0 mm bis 2,0 mm, insbesondere von 1,3 mm bis 1,7 mm aufweist.

12. Fahrzeugluftreifen nach einem der Ansprüche 1 bis 11, **dadurch gekenzeichnet**, dass die ersten Sackrillen (4) zu den zweiten Sackrillen (5) einen zwischen den Endflanken (4c, 5c) in Umfangsrichtung ermittelten Versatz (v₂) von 3,0 mm bis 15,0 mm, insbesondere von 4,0 mm bis 10,0 mm, aufweisen, wobei die einschnittartigen Rillen (6) zwischen diesen Versatz (v₂) zueinander aufweisenden Sackrillen (4, 5) verlaufen.

13. Fahrzeugluftreifen nach einem der Ansprüche 1 bis 12, **dadurch gekenzeichnet**, dass die maximale Breite (b_{SR1}, b_{SR2}) der Sackrillen (4, 5) 3,0 mm bis 5,0 mm beträgt, wobei die maximale Breite (b_{SR1}, b_{SR2}) der Sackrillen (4, 5) insbesondere 180% bis 220% der Breite (b_{R}) der zwischen ihnen verlaufenden einschnittartigen Rille (6) beträgt.

14. Fahrzeugluftreifen nach einem der Ansprüche 1 bis 13, **dadurch gekenzeichnet**, dass die Sackrillen (4, 5), in Draufsicht betrachtet gerade sowie bezüglich der axialen Richtung gegensinnig zueinander geneigt verlaufen, wobei die ersten Sackrillen (4) zur axialen Richtung unter einem Winkel (α) von 5 bis 25°, insbesondere von 10° bis 20°, und die zweiten Sackrillen (5) zur axialen Richtung unter einem Winkel (β) von 25° bis 45°, insbesondere von 30° bis 40°, verlaufen.

15. Fahrzeugluftreifen mit einem Laufstreifen, wobei die zumindest eine Profilrippe (1) durch die Sackrillen (4, 5) und einschnittartige Rillen (6) in in Umfangsrichtung aufeinanderfolgende Rippenblöcke (1b) strukturiert ist, nach einem der Ansprüche 1 bis 14, **dadurch gekennzeichnet, dass** jeder Rippenblock (1b) mit zumindest zwei, bevorzugt mit drei, Einschnitten (10, 11, 12) mit einer Breite von 0,4 mm bis 1,0 mm und einer Tiefe von 30% bis 90% der Profiltiefe (T_{UR}) versehen ist, wobei zu diesen Einschnitten (10, 11, 12) Einschnitte (10, 11, 12) gehören, welche im Bereich des rippeninnenseitigen Grundabschnittes (4bᵢ, 5bᵢ) in die Sackrillen (4, 5) einmünden und wobei zu diesen Einschnitten (10, 11, 12) vorzugsweise Einschnitte (10, 11) gehören, welche zusätzlich zu einer Umfangsrille (2, 3) verlaufen.

## Claims

1. Pneumatic vehicle tyre with a tread comprising at least one central profile rib (1), which is delimited on each side by a circumferential groove (2, 3) and has a rib outer surface (1a), lying in the periphery of the tread, wherein the central profile rib (1) is provided with first blind grooves (4), merging into the one circumferential groove (3), and with second blind grooves (5), merging into the other circumferential groove (2), formed offset in relation to the first blind grooves (4) in the circumferential direction and running with respect to the circumferential direction without overlapping these first blind grooves, wherein each blind groove (4, 5) is delimited by two groove flanks (4a, 5a), a groove base (4b, 5b) and an end flank (4c, 5c), lying inside the profile rib (1) and running to the rib outer surface (1a), and have a maximum width (b_{SR1}, b_{SR2}) of 2.5 mm to 10.0 mm, wherein the blind grooves (4, 5) become shallower towards their end flanks (4c, 5c), at least over a base portion (4bᵢ, 5bᵢ) of their groove base (4b, 5b) on the inner side of the rib and adjoining the respective end flank (4c, 5c) and have their smallest depth (t₁) in the region of the base portion (4bᵢ, 5bᵢ) on the inner side of the rib, wherein sipe-like grooves (6) are provided, extending from the rib outer surface (1a), made narrower than the blind grooves (4, 5), respectively running between a first blind groove (4) and a second blind groove (5) and having a width (b_{R}) of 0.4 to 4.0 mm, **characterized in that** the sipe-like grooves (6) have a maximum depth (t_{R}) that is made greater than the smallest depths (t₁) of the blind grooves (4, 5) and, when seen in plan view, are made up in each case of three straight portions (6a, 6b, 6c) forming angles (µ) with one another of 100° to 150° each, wherein the maximum width (b_{SR1}, b_{SR2}) of the blind grooves (4, 5) is 130% to 250% of the width (b_{R}) of the sipe-like groove (6) running between them.

2. Pneumatic vehicle tyre according to Claim 1, **characterized in that** the angles (µ) which the portions (6a, 6b, 6c) of the sipe-like grooves (6) form with one another are in each case 110° to 140°, preferably 115° to 135°.

3. Pneumatic vehicle tyre according to Claim 1 or 2, **characterized in that** the angles (µ) which the portions (6a, 6b, 6c) of the sipe-like grooves (6) form with one another lie on the same side of the sipe-like groove (6).

4. Pneumatic vehicle tyre according to one of Claims 1 to 3, **characterized in that** the maximum depth (t_{R}) of the sipe-like grooves (6) is 55% to 100%, in particular 60% to 80%, preferably 65% to 70%, of the profile depth (T_{UR}), wherein preferably at least the central portion (6a) of each sipe-like groove (6) reaches to the maximum depth (t_{R}) over its entire extent.

5. Pneumatic vehicle tyre according to one of Claims 1 to 4, **characterized in that** the smallest depth (t₁) of each blind groove (4, 5) is 10% to 40%, in particular 20% to 30%, preferably 25% to 35%, of the profile depth (T_{UR}).

6. Pneumatic vehicle tyre according to one of Claims 1 to 5, **characterized in that** the smallest depth (t₁) of each blind groove (4, 5) is smaller by 2.0 mm to 7.0 mm, in particular by 2.0 mm to 4.0 mm, than the maximum depth (t_{R}) of the sipe-like groove (6).

7. Pneumatic vehicle tyre according to one of Claims 1 to 6, **characterized in that** sipe-like grooves (6) which merge into the one blind groove (5) by way of a groove flank (5a) and into the other blind groove (4) by way of the end flank (4c) are provided.

8. Pneumatic vehicle tyre according to one of Claims 1 to 7, **characterized in that** the blind grooves (4, 5) and the sipe-like grooves (6) have - with respect to the associated groove centreline (m_{SR1}, m_{SR2}, m_{R}) - in each case a length (c_{SR1}, c_{SR2}, c_{R}) determined on the rib outer surface (1a) and projected in the axial direction, wherein the length (c_{SR1}, c_{SR2}) of the blind grooves (4, 5) is 20% to 45% of the width (b_{PR}) of the profile rib (1) determined on the rib outer surface (1a) and projected in the axial direction and wherein the length (c_{R}) of the sipe-like grooves (6) is 25% to 55%, in particular 35% to 45%, of the width (b_{PR}) of the profile rib (1) determined on the rib outer surface (1a) and projected in the axial direction.

9. Pneumatic vehicle tyre according to one of Claims 1 to 8, **characterized in that** the base portion (4bᵢ, 5bᵢ) of the groove base (4b, 5b) of the blind grooves (4, 5) on the inner side of the rib has a length (c₁, c₂) determined on the rib outer surface (1a), with respect to the groove centreline (m_{SR1}, m_{SR2}) and projected in the axial direction of 65% to 90% of the length (c_{SR1}, c_{SR2}) of the blind groove (4, 5) with respect to the groove centreline (m_{SR1}, m_{SR2}) and projected in the axial direction.

10. Pneumatic vehicle tyre according to one of Claims 1 to 9, **characterized in that**, when viewed in longitudinal section, aligned along the groove centreline (m_{SR1}, m_{SR2}), through the blind grooves (4, 5), the base portion (4bᵢ, 5bᵢ) of the groove base (4b, 5b) of the blind grooves (4, 5) on the inner side of the rib runs at a constant angle (δ, ε) to the radial direction.

11. Pneumatic vehicle tyre according to one of Claims 1 to 10, **characterized in that** the groove base (4b, 5b) of the blind grooves (4, 5) is made up of the base portion (4bᵢ, 5bᵢ) on the inner side of the rib and a base portion (4bₐ, 5bₐ) on the outer side of the rib, wherein, when seen in longitudinal section, aligned along the groove centreline (m_{SR1}, m_{SR2}), through the blind grooves (4, 5), the base portion (4bₐ, 5bₐ) on the outer side of the rib is at a constant distance (32) from the level of the profile depth (T_{UR}) in the radial direction of 1.0 mm to 2.0 mm, in particular of 1.3 mm to 1.7 mm.

12. Pneumatic vehicle tyre according to one of Claims 1 to 11, **characterized in that** the first blind grooves (4) have in relation to the second blind grooves (5) an offset (v₂), determined between the end flanks (4c, 5c) in the circumferential direction, of 3.0 mm to 15.0 mm, in particular of 4.0 mm to 10.0 mm, wherein the sipe-like grooves (6) run between blind grooves (4, 5) having this offset (v₂) in relation to one another.

13. Pneumatic vehicle tyre according to one of Claims 1 to 12, **characterized in that** the maximum width (b_{SR1}, b_{SR2}) of the blind grooves (4, 5) is 3.0 mm to 5.0 mm, wherein the maximum width (b_{SR1}, b_{SR2}) of the blind grooves (4, 5) is in particular 180% to 220% of the width (b_{R}) of the sipe-like groove (6) running between them.

14. Pneumatic vehicle tyre according to one of Claims 1 to 13, **characterized in that**, when seen in plan view, the blind grooves (4, 5) run straight and oppositely to one another with respect to the axial direction, wherein the first blind grooves (4) run at an angle (α) to the axial direction of 5 to 25°, in particular of 10° to 20°, and the second blind grooves (5) run at an angle (β) to the axial direction of 25° to 45°, in particular of 30° to 40°.

15. Pneumatic vehicle tyre with a tread, wherein the at least one profile rib (1) is structured by the blind grooves (4, 5) and sipe-like grooves (6) to form rib blocks (1b) following one another in the circumferential direction, according to one of Claims 1 to 14, **characterized in that** each rib block (1b) is provided with at least two, preferably with three, sipes (10, 11, 12) with a width of 0.4 mm to 1.0 mm and a depth of 30% to 90% of the profile depth (T_{UR}), wherein these sipes (10, 11, 12) include sipes (10, 11, 12) which merge into the blind grooves (4, 5) in the region of the base portion (4bᵢ, 5bᵢ) on the inner side of the rib and wherein these sipes (10, 11, 12) preferably include sipes (10, 11) which additionally run to a circumferential groove (2, 3).

## Revendications

1. Pneumatique de véhicule avec une bande de roulement avec au moins une nervure de profil centrale (1) délimitée de chaque côté par une rainure circonférentielle (2, 3), avec une surface extérieure de nervure (1a) située dans la périphérie de la bande de roulement, la nervure de profil centrale (1) étant munie de premières rainures borgnes (4) débouchant dans l'une des rainures circonférentielles (3) et de deuxièmes rainures borgnes (5) débouchant dans l'autre rainure circonférentielle (2), réalisées décalées par rapport aux premières rainures borgnes (4) dans la direction circonférentielle et s'étendant sans chevauchement par rapport à celles-ci dans la direction circonférentielle, chaque rainure borgne (4, 5) étant délimitée par deux flancs de rainure (4a, 5a), un fond de rainure (4b, 5b) ainsi qu'un flanc d'extrémité (4c, 5b) situé à l'intérieur de la nervure de profil (1), s'étendant vers la surface extérieure de nervure (1a), et présentant une largeur maximale (b_{SR1}, b_{SR2}) de 2,5 mm à 10,0 mm, les rainures borgnes (4, 5) devenant moins profondes vers leurs flancs d'extrémité (4c, 5c) au moins sur une section de base côté intérieur de la nervure (4bᵢ, 5bᵢ) de leur fond de rainure (4b, 5b), se raccordant au flanc d'extrémité (4c, 5c) respectif, et présentant leur plus petite profondeur (t₁) dans la zone de la section de base côté intérieur de la nervure (4bᵢ, 5bᵢ), des rainures en forme d'incision (6) partant de la surface extérieure de nervure (1a), conçues plus étroites que les rainures borgnes (4, 5) étant prévues, qui s'étendent respectivement entre une première rainure borgne (4) et une deuxième rainure borgne (5), et qui présentent une largeur (b_{R}) de 0,4 mm à 4,0 mm, **caractérisé en ce que** les rainures en forme d'incision (6) présentent une profondeur maximale (t_{R}) conçue supérieure aux plus petites profondeurs (t₁) des rainures borgnes (4, 5) et, vues de dessus, se composent chacune de trois sections droites (6a, 6b, 6c) formant entre elles des angles (µ) de 100° à 150°, la largeur maximale (b_{SR1}, b_{SR2}) des rainures borgnes (4, 5) étant de 130 % à 250 % de la largeur (b_{R}) de la rainure en forme d'incision (6) s'étendant entre elles.

2. Pneumatique de véhicule selon la revendication 1, **caractérisé en ce que** les angles (µ) que les sections (6a, 6b, 6c) des rainures en forme d'incision (6) forment entre elles sont chacun de 110° à 140°, de préférence de 115° à 135°.

3. Pneumatique de véhicule selon la revendication 1 ou 2, **caractérisé en ce que** les angles (µ) que les sections (6a, 6b, 6c) des rainures en forme d'incision (6) forment entre elles sont du même côté de la rainure en forme d'incision (6).

4. Pneumatique de véhicule selon l'une quelconque des revendications 1 à 3, **caractérisé en ce que** la profondeur maximale (t_{R}) des rainures en forme d'incision (6) est de 55 % à 100 %, notamment de 60 % à 80 %, de préférence de 65 % à 70 %, de la profondeur de profil (T_{UR}), de préférence au moins la section centrale (6a) de chaque rainure en forme d'incision (6) s'étendant sur toute son étendue jusqu'à la profondeur maximale (t_{R}).

5. Pneumatique de véhicule selon l'une quelconque des revendications 1 à 4, **caractérisé en ce que** la plus petite profondeur (t₁) de chaque rainure borgne (4, 5) représente 10 % à 40 %, notamment 20 % à 30 %, de préférence 25 % à 35 %, de la profondeur de profil (T_{UR}).

6. Pneumatique de véhicule selon l'une quelconque des revendications 1 à 5, **caractérisé en ce que** la plus petite profondeur (t₁) de chaque rainure borgne (4, 5) est inférieure de 2,0 mm à 7,0 mm, notamment de 2,0 mm à 4,0 mm, à la profondeur maximale (t_{R}) de la rainure en forme d'incision (6).

7. Pneumatique de véhicule selon l'une quelconque des revendications 1 à 6, **caractérisé en ce qu'**il est prévu des rainures en forme d'incision (6) qui débouchent dans l'une des rainures borgnes (5) par l'intermédiaire d'un flanc de rainure (5a) et dans l'autre rainure borgne (4) par l'intermédiaire du flanc d'extrémité (4c).

8. Pneumatique de véhicule selon l'une quelconque des revendications 1 à 7, **caractérisé en ce que** les rainures borgnes (4, 5) et les rainures en forme d'incision (6) - par rapport à la ligne médiane de rainure correspondante (m_{SR1}, m_{SR2}, m_{R}) - présentent chacune une longueur (c_{SR1}, c_{SR2}, c_{R}) déterminée sur la surface extérieure de nervure (1a), projetée dans la direction axiale, la longueur (c_{SR1}, c_{SR2}) des rainures borgnes (4, 5) représentant de 20 % à 45 % de la largeur (b_{PR}) de la nervure de profil (1), déterminée sur la surface extérieure de nervure (1a), projetée dans la direction axiale, et la longueur (c_{R}) des rainures en forme d'incision (6) représentant de 25 % à 55 %, notamment de 35 % à 45 %, de la largeur (b_{PR}) de la nervure de profil (1), déterminée sur la surface extérieure de nervure (1a), projetée dans la direction axiale.

9. Pneumatique de véhicule selon l'une quelconque des revendications 1 à 8, **caractérisé en ce que** la section de base côté intérieur de la nervure (4bᵢ, 5bᵢ) du fond de rainure (4b, 5b) des rainures borgnes (4, 5) présente une longueur (c₁, c₂) déterminée sur la surface extérieure de nervure (1a), par rapport à la ligne médiane de rainure (m_{SR1}, m_{SR2}), projetée dans la direction axiale, de 65 % à 90 % de la longueur (c_{SR1}, c_{SR2}) de la rainure borgne (4, 5), projetée dans la direction axiale, par rapport à la ligne médiane de rainure (m_{SR1}, m_{SR2}).

10. Pneumatique de véhicule selon l'une quelconque des revendications 1 à 9, **caractérisé en ce que** la section de base côté intérieur de la nervure (4bᵢ, 5bᵢ) du fond de rainure (4b, 5b) des rainures borgnes (4, 5), vue en coupe longitudinale à travers les rainures borgnes (4, 5) orientée le long de la ligne médiane de rainure (m_{SR1}, m_{SR2}), s'étend sous un angle constant (δ, ε) par rapport à la direction radiale.

11. Pneumatique de véhicule selon l'une quelconque des revendications 1 à 10, **caractérisé en ce que** le fond de rainure (4b, 5b) des rainures borgnes (4, 5) se compose de la section de base côté intérieur de la nervure (4bᵢ, 5bᵢ) et d'une section de base côté extérieur de la nervure (4bₐ, 5bₐ), la section de base côté extérieur de la nervure (4bₐ, 5bₐ) présentant, vue en coupe longitudinale orientée le long de la ligne médiane de rainure (m_{SR1}, m_{SR2}) à travers les rainures borgnes (4, 5), une distance constante (a₂) de 1,0 mm à 2,0 mm, notamment de 1,3 mm à 1,7 mm, par rapport au niveau de la profondeur de profil (T_{UR}) dans la direction radiale.

12. Pneumatique de véhicule selon l'une quelconque des revendications 1 à 11, **caractérisé en ce que** les premières rainures borgnes (4) présentent par rapport aux deuxièmes rainures borgnes (5) un décalage (v₂) déterminé entre les flancs d'extrémité (4c, 5c) dans la direction circonférentielle de 3,0 mm à 15,0 mm, notamment de 4,0 mm à 10,0 mm, les rainures en forme d'incision (6) s'étendant entre les rainures borgnes (4, 5) présentant ce décalage (v₂) les unes par rapport aux autres.

13. Pneumatique de véhicule selon l'une quelconque des revendications 1 à 12, **caractérisé en ce que** la largeur maximale (b_{SR1}, b_{SR2}) des rainures borgnes (4, 5) est de 3,0 mm à 5,0 mm, la largeur maximale (b_{SR1}, b_{SR2}) des rainures borgnes (4, 5) étant notamment de 180 % à 220 % de la largeur (b_{R}) de la rainure en forme d'incision (6) qui s'étend entre elles.

14. Pneumatique de véhicule selon l'une quelconque des revendications 1 à 13, **caractérisé en ce que** les rainures borgnes (4, 5), vues de dessus, sont rectilignes et inclinées en sens inverse l'une par rapport à l'autre dans la direction axiale, les premières rainures borgnes (4) s'étendant par rapport à la direction axiale selon un angle (α) de 5 à 25°, notamment de 10° à 20°, et les deuxièmes rainures borgnes (5) s'étendant par rapport à la direction axiale selon angle (β) de 25° à 45°, notamment de 30° à 40°.

15. Pneumatique de véhicule avec une bande de roulement, l'au moins une nervure de profil (1) étant structurée par les rainures borgnes (4, 5) et les rainures en forme d'incision (6) dans des blocs de nervure (1b) successifs dans la direction circonférentielle, selon l'une quelconque des revendications 1 à 14, **caractérisé en ce que** chaque bloc de nervure (1b) est muni d'au moins deux, de préférence de trois, incisions (10, 11, 12) ayant une largeur de 0,4 mm à 1,0 mm et une profondeur de 30 % à 90 % de la profondeur de profil (T_{UR}), ces incisions (10, 11, 12) comprenant des incisions (10, 11, 12) qui débouchent dans les rainures borgnes (4, 5) dans la zone de la section de base côté intérieur de la nervure (4bᵢ, 5bᵢ), et ces incisions (10, 11, 12) comprenant de préférence des incisions (10, 11) qui s'étendent en plus vers une rainure circonférentielle (2, 3).
